# EUROPEAN PATENT SPECIFICATION

(11) **EP 3 671 528 B1**
(45) Date of publication and mention of the grant of the patent: **27.10.2021**
(21) Application number: 18213106.0
(22) Date of filing: 17.12.2018
(51) Int. Cl.: G06K 7/10

(54) **APPARATUS AND METHOD FOR READING A SPORTS TIMING TRANSPONDER**
VORRICHTUNG UND VERFAHREN ZUM AUSLESEN EINES SPORTZEITNAHMETRANSPONDERS
APPAREIL ET PROCÉDÉ DE LECTURE D'UN TRANSPONDEUR DE SYNCHRONISATION DE SPORT

(43) Date of publication of application: 24.06.2020
(73) Proprietor: race result AG, 76327 Pfinztal (DE)
(72) Inventor: Klohr, Nikias, 76297 Stutensee (DE); Wuenschmann, Marco, 75031 Eppingen (DE)
(74) Representative: Durm Patentanwälte PartG mbB

(56) References cited:
- EP-A2- 1 331 590
- WO-A1-2018/047022
- CN-A- 107 251 446
- US-A1- 2015 154 434
- US-B1- 7 806 333

## Description

The present invention relates to an apparatus and a method for reading a sports timing transponder. The present invention further relates to a system for reading a sports timing transponder.

In the field of timing at sports events, for example running events, marathons, bicycle races, skiing races, car races, horse races or comparable events, timing of participants' start, finish, and split times plays an important role. In prevailing timing systems, oftentimes a person, a vehicle or an animal, whose time is to be measured, carries a radio element (sports timing transponder, in particular an active or passive RFID tag) for non-contact, automated timing. Runners, for instance, may carry radio elements that are attached to shoe laces or to a bib number for being attached to the participant's shirt or pants or also to a sports equipment like a bike, a cart or a rifle etc. In the case of cycling events, it is possible to attach respective radio elements to the handlebar of a bicycle.

At start, finish and split time positions along a track, measuring points are provided to detect the presence of the radio element. For this purpose, a measuring point comprises a corresponding antenna and data processing means to process the received data and to determine a passing time, i.e. a moment in time at which the radio element passes the measuring point. Usually, the determined passing times for the participants are then communicated to a central evaluation point.

In this context, a sports timing transponder particularly designates a radio element that is able to transmit as well as to receive radio signals. Herein, a sports timing transponder particularly refers to an active RFID tag that has an integrated energy source and processor. Upon passing a measuring point including a near field antenna, in particular an induction loop, that is usually arranged on the ground, the sports timing transponder detects the near field and transmits a communication signal to the measuring point. Usually, induction loops generating an inductive field and transponders with suitable antennas are used for the timing of sports events. On the one hand, it is possible that the sports timing transponder itself determines the passing time by means of its processor. On the other hand, it is also possible that the passing time is determined by the measuring point, i.e. centrally for all passing sports timing transponders.

In addition to detecting the near field for determining the passing time, the sports timing transponder transmits an identification information (transponder ID) to the measuring point. This identification information is usually unambiguously correlated to the identity of a respective participant of the sports event for identifying this participant. The combination of the determined passing time and the corresponding identification information allows evaluating the sports event and determining a ranking.

For identifying the sports timing transponder, the transponder is usually pre-programmed with a unique ID (chip code). This unique ID is transmitted from the sports timing transponder to the measuring point and evaluated in a corresponding software. For generating a passing time for a specific participant or team it is then necessary to correlate this unique ID of the transponder to a participant ID, e.g. a bib number, a name of the participant and/or a team name. This correlation is usually carried out by means of a corresponding mapping (also referred to as a chip file). This mapping may, e.g., include a table with two columns with a unique ID and a corresponding participant ID (bib number of a participant) in each row. The mapping may also comprise a visual mapping in the form of a sticker displaying the participant ID that can be attached to the transponder.

One challenge with this approach is the generation and maintenance of the mapping. If, for instance, a timer has a certain number of sports timing transponders (a population of transponders), usually a static mapping of the unique IDs of the transponders to numbers is generated upon the first use of the transponders in a sports event. Often, each sports timing transponder is equipped with a permanent label showing this number attached to the transponder. This label can then also be used by the participant for identifying his transponder, for instance if several participants mix up their transponders.

If a sports timing transponder is lost or malfunctioning and has to be replaced, this new transponder has to be inserted into the existing mapping. This is also one of the original reasons for using a mapping of the unique IDs of the transponders to participant IDs instead of directly programming the transponders with a bib number (that could correspond to a participant ID). The generation of the mapping or the replacement of a transponder in an existing mapping is often inefficient and error-prone, which results in high costs and errors due to falsely assigned transponders. This is particularly relevant if a new mapping is required for each sports event due to a change in the transponder population from one event to another.

WO 2018/047022 A1 relates to an electronic reader. A method of determining a location of a selected electronic tag amongst an array of closely stacked tags is described. The method uses a near-field electronic reader comprising at least two antennas. The method comprises generating at least two magnetic fields using the at least two antennas, the at least two magnetic fields causing intersecting lines of magnetic flux relative to the array of closely stacked tags. The intersecting lines of magnetic flux define at least one detection zone. The method comprises sequentially switching each antenna to receive sequential antenna signals indicative of tags within each magnetic field, and the antenna signals include detection zone readings. Responsive to at least two successive sequential switching operations, a difference in two successive detection zone readings is obtained. An output signal is generated.

US 7,806,333 B1 relates to tracking RFID tags with overlapping antennas. A system for tracking RFID tags with a reader device having a plurality of antennas is disclosed. The antennas are positioned such that portions of at least two of the plurality of antennas physically overlap each other and are in approximately the same place. A pair of overlapping antennas is also positioned so that an RFID tag is positioned within both signal fields of the pair of overlapping antennas. The reader device is configured to selectively activate the plurality of overlapping antennas to thereby selectively interrogate one or more of the RFID tags, and the reader device is configured to use the selective interrogation of the one or more RFID tags to track the locations of the RFID tags.

EP 1331590 A2 relates to an apparatus and method for locating an RFID transponder. An RFID transponder for broadcasting identification data and a plurality of antennas for receiving identification data broadcast by the RFID transponder are disclosed. The plurality of antennas is associated with the plurality of support members or shells and a control circuitry connected to the plurality of antennas determines which of the plurality of antennas receives identification information broadcast by the RFID transponder to determine the location of the transponder.

In view of the above, the present invention addresses the problem of making the process of mapping a transponder ID to an ID of a participant of a sports event more efficient. In particular, errors in the assignment shall be avoided and it should be assured that each participant of a sports event is provided with a correctly assigned sports timing transponder. Further, costs of mapping a transponder ID to a participant ID shall be reduced.

To solve this problem, a first aspect of the present invention relates to an apparatus for reading a sports timing transponder corresponding to an active RFID tag, comprising:
- a holding unit for holding the transponder within an activation area, said holding unit having a plurality of near field antennas for generating near fields in the activation area;
- a controller for activating the plurality of near field antennas in a predefined activation order to initiate a measurement of a passing time in the transponder in the activation area;
- a receiver for receiving a communication signal from the transponder including a transponder ID and a result of the measurement of the passing time;
- a processing unit for determining a position of the transponder within the activation area based on the communication signal and the predefined activation order and based on a determination which near field antenna was activated at the measured passing time; and
- an output unit for generating representation data including information on the determined position and the transponder ID.

Another aspect of the present invention relates to a method for reading a sports timing transponder corresponding to an active RFID tag, comprising the steps of:
- holding the transponder within an activation area of a holding unit, said holding unit having a plurality of near field antennas for generating near fields in the activation area;
- activating the plurality of near field antennas in a predefined activation order to initiate a measurement of a passing time in the transponder in the activation area;
- receiving a communication signal from the transponder including a transponder ID and a result of the measurement of the passing time;
- determining a position of the transponder within the activation area based on the communication signal and the predefined activation order and based on a determination which near field antenna was activated at the measured passing time; and
- generating representation data including information on the determined position and the transponder ID.

Yet another aspect of the present invention relates to a system for reading a sports timing transponder corresponding to an active RFID tag, comprising:
- an apparatus as defined above; and
- a sports timing transponder for providing a measurement of a passing time upon initiation by an near field.

In yet another aspect of the present invention, there is provided a computer program which comprises program code means for causing a computer to perform the steps of the method disclosed herein when said computer program is carried out on a computer as well as a non-transitory computer-readable recording medium that stores therein a computer program product, which, when executed by a processor, causes the method herein to be performed.

Preferred embodiments of the invention are defined in the dependent claims. It shall be understood that the claimed apparatus, method, system, computer program and medium have similar and/or identical preferred embodiments as the claimed apparatus and system, in particular as defined in the dependent claims and as disclosed herein.

The apparatus of the present invention provides an automated, fast and reliable determination of a transponder ID and a respective position of the transponder within the activation area of a holding unit. Usually, the IDs and positions of a plurality of transponders within the activation area are determined. Based upon the generated representation data a mapping (chip file) can be generated in which transponder IDs are correlated with participant IDs. The determination of the transponder ID and the position of the transponder thereby form the basis for assigning the transponder IDs to respective participant IDs and for generating the mapping.

A plurality of transponders is positioned within the activation area. In order to determine the positions of the transponders within the activation area, the passing time measurement functionality of the transponder is used. The holding unit includes a plurality of near field antennas, which generate near fields within the activation area. The near field antennas are activated in a predefined order so that a measurement of a passing time is initiated in each transponder in the activation area. In other words, the transponders measure a near field in the same way as if passing a measuring point (in particular a start or finish line) at a sports event. For this purpose, it is for instance possible to activate a near field antenna of the holding unit that is in an immediate spatial vicinity of a transponder in the activation area. The determination of the passing time can be carried out on the transponder or in the apparatus. Based on the determined passing time it can be derived in the processing unit which of the activated near field antennas has initiated the measurement. Since the activation order of the near field antennas and the respective positions of the near field antennas are known, it becomes possible to determine the position of the transponder based on the result of the measurement of the passing time.

In comparison to the current process of individually determining a transponder ID and assigning a respective participant ID, the approach of the present invention has the advantage that a plurality of transponders can be read out simultaneously in order to assign the transponder IDs to participant IDs. In other words, a batch processing is provided. Instead of individually introducing each transponder ID into the mapping, a number of transponders can be simultaneously read out and mapped. The process of generating the mapping becomes more efficient so that time and costs can be saved. An efficient and reliable mapping of transponder IDs to participant IDs is provided. It is assured that a correct assignment is provided. False assignments and therefrom resulting errors when determining a passing time of a transponder of a sports event are avoided.

In a preferred embodiment, the holding unit has a plurality of induction loops for generating inductive fields corresponding to the near field antennas and the nearfields. In otherwords, the induction loops represent the nearfield antennas and the generated inductive fields represent the near fields. Usually, induction loops generating inductive fields are used in sports events due to their directionality and range properties. The transponders are configured accordingly.

In a preferred embodiment, the wireless communication signal includes a result of the measurement of the passing time. It is particularly advantageous if the passing time is determined within the transponder. Usually, the field strengths of different detections of a near field are evaluated for this. Then, the result of the determination of the passing time is communicated to the apparatus. The determination of the position of the transponder can then be based on the passing time of the transponder. Thereby, communication bandwidth is saved and a reliable determination of the transponder within the activation area is assured.

In another embodiment, the plurality of near field antennas includes a first subset of near field antennas arranged parallel to one another and a second subset of near field antennas arranged parallel to one another. The near field antennas of the first subset are arranged orthogonal to and (partly) overlapping with the near field antennas of the second subset. Preferably, the first subset includes five near field antennas and the second subset includes four near field antennas. This arrangement of the near field antennas makes it possible to exploit a column-and-row structure of the near field antennas in the activation area. Such a column-and-row structure allows deriving a two-dimensional position of the transponder within the activation area. Based on the horizontally arranged near field antennas the horizontal coordinate of a transponder in the activation area can be determined. Based on the vertically arranged near field antennas the vertical coordinate of the transponder can be determined. A reliable position determination, in particular a 2D-position determination, becomes possible.

In another preferred embodiment, the controller is configured to sequentially activate the near field antennas of the first subset starting with a first outer near field antenna of the first subset in a direction of a second outer near field antenna of the first subset. In addition, the controller is configured to sequentially activate the near field antennas of the second subset starting with a first outer near field antenna of the second subset in a direction of a second outer near field antenna of the second subset. By sequentially activating the near field antennas from one side to the other (from one outer near field antenna via one or more intermediate near field antennas to another outer near field antenna), the transponders register a near field that virtually passes from one side to the other. This virtual passing corresponds to an observation of a transponder being moved over a finish line of a sports event with a near field antenna arranged in the area of the finish line. Thus, sequentially activating the near field antennas of the first subset generates a measurement of the passing time that corresponds to a position of the transponder in the direction of the moving near field, i.e. a direction orthogonal to the first subset of near field antennas. The sequential activation of the near field antennas of the second subset then provides a corresponding second passing time measurement representing a coordinate of the transponder in a direction orthogonal to the second subset of near field antennas. Based on the two passing time measurements, it thus becomes possible to precisely determine a two-dimensional position of the transponder within the activation area.

In a preferred embodiment, the output unit is configured to generate control information for controlling a printer to print an identification sheet with a detachable transponder sticker to be attached to the transponder based on the representation data, said transponder sticker being arranged on the identification sheet in a sheet position corresponding to the determined position of the transponder. By printing an identification sheet, it becomes possible to immediately generate a plurality of transponder stickers that are already arranged in a correct position to be attached to a plurality of transponders in the activation area corresponding to the positions of the transponders in the activation area. The sheet positions of the transponder stickers are derived from the transponder positions so that the printed identification sheet can be applied to the transponders in the activation area. It becomes possible to simultaneously generate a plurality of transponder stickers that can be used by participants or timers to identify the respective transponders. A fast and reliable mapping of transponder IDs to participant IDs can be obtained.

In another preferred embodiment, the apparatus includes an input interface for receiving an assignment list with a plurality of participant IDs of participants of a sports timing event. The processing unit is configured to generate assignment data with an assignment of a participant ID to the transponder ID. Preferably, the output unit is configured to generate representation data including an assigned participant ID for the transponder based on the assignment data. Thus, it is possible that the assignment is carried out within the apparatus if a corresponding assignment list is received via an input interface. By generating representation data including an assigned participant ID for the transponder, i.e. an assignment of a participant ID to a transponder ID, this representation data corresponds to a mapping (chip file). Thus, an efficient and reliable generation of a chip file is assured.

In another preferred embodiment, the holding unit is configured to hold a removable transponder tray having multiple transponder notches for inserting the transponder. The holding unit includes a unit positioning element interacting with a corresponding tray positioning element of the transponder tray to unambiguously define a transponder tray position with respect to the holding unit. The unit positioning element preferably includes at least one protrusion and/or at least one recess interacting with a corresponding protrusion or recess of the tray positioning element. Usually, the system of the present invention makes use of transponder trays, i.e. trays for storing and handling a plurality of transponders. The trays can be placed in the activation area of the holding unit of the apparatus. By making use of a transponder tray interacting with the holding unit, it becomes possible to efficiently arrange a plurality of transponders within the activation area of the holding unit. Usually, stackable transponder trays are used for storing a number of transponders. If these trays can directly be used for determining the positions of the transponders and for assigning participant IDs to the transponders in the tray, an efficient generation of a mapping is assured.

The transponders do not have to be removed from the storage trays. Usually, the tray defines two-dimensional transponder positions within the activation area so that the position determination corresponds to a two-dimensional coordinate determination in the tray. The use of positioning elements thereby assures that the positioning of the transponders in the notches of the transponder tray is unambiguously defined with respect to the apparatus and its holding unit. An efficient positioning can be realized by making use of at least one protrusion interacting with at least one recess.

In a preferred embodiment, the holding unit is configured to hold the transponder in a transponder tray position in which the multiple transponder notches are each located in an immediate vicinity of a crossing of a first near field antenna of the first subset with a second near field antenna of the second subset. By making use of a two-dimensional arrangement of transponders in a transponder tray, it is particularly advantageous to have each transponder located in a vicinity of a crossing of orthogonally arranged near field antennas. Thereby, it becomes possible to sequentially determine two coordinates of a two-dimensional position of a transponder within the transponder tray. An efficient position determination is obtained.

In a preferred embodiment of the system of the present invention, the system comprises a printer for printing an identification sheet with a detachable transponder sticker to be attached to the transponder based on the representation data, said detachable transponder sticker being arranged on the identification sheet in a sheet position corresponding to the determined position of the transponder. In particular, a standard printer, e.g. an inkjet or a laser printer, can be used. An adhesive sheet is then used to generate the identification sheet. The adhesive sheet can be provided with corresponding printouts on positions on the sheets that correspond to the transponder positions within the activation area.

In another preferred embodiment, the system comprises a removable transponder tray having multiple transponder notches for inserting the transponder. The identification sheet preferably has the same format as the transponder tray and is configured to be placed on the transponder tray for attaching the transponder sticker to the transponder. If the same format of the transponder tray and the identification sheet is used, an efficient and reliable connection of the adhesive stickers to the transponders in the transponder tray is obtained. Each transponder can be placed in an arbitrary position in the tray. It is not required to sort the transponders. Then, the transponder ID and position of each transponder in the tray is connected with a participant ID, e.g. a bib number or a participant name etc., in a list and an identification sheet representing the mapping is generated. Thus, a fast and efficient batch processing of transponders in transponder trays can be realized.

In another preferred embodiment of the system, the printer is configured to determine control information based on the representation data and to print a machine-readable code including the control information on the identification sheet in a predefined position. The system comprises a code scanner for reading the control information from the machine-readable code in the predefined position on the identification sheet when said identification sheet is placed on the transponder tray. Further, the processing unit is configured to compare the control information with new representation data determined in a new read process. In addition, the output unit is configured to provide positive feedback when the control information corresponds to the new representation data. The use of control information being printed on the identification sheet allows an additional check whether or not the identification sheet corresponds to the transponders in the tray in the activation area. If the code scanner is able to read the control information, the apparatus can determine which transponders are described by the information of the identification sheet. If then a new read process is carried out and the apparatus determines which transponders are actually placed in the activation area, it becomes possible to match the control information with the actual transponders. This corresponds to an additional check whether an identification sheet corresponds to the transponders currently in the activation area and a correct assignment is carried out. Thus, the assignment of transponder IDs to participant IDs can be carried out with a high degree of reliability.

In another preferred embodiment of the system, the transponder tray is stackable with further transponder trays. Alternatively or additionally, the transponder tray includes a transparent material in the area of the notches. Further alternatively or additionally, the transponder tray is designed for removing the transponder from a notch of the plurality of notches by means of a tilting movement. The use of a stackable transponder tray results in the advantage that a better stocking of transponders becomes possible. The use of a transparent material makes it possible to read information that is printed on the transponders through the transponder tray to obtain reliable information on the transponders in the tray. The efficient removing of a transponder from a notch of the transponder tray assures that an efficient distribution of the transponders becomes possible. A manually applied (by a person) tilting movement causes a transponder to pop out of the tray.

Herein, a sports timing transponder particularly refers to an active RFID tag. Preferably, the sports timing transponder includes an energy source and a processor. A sports event is particularly a running event such as a marathon or the like. However, a sports event can also be a bike race, a car race, a ski race, a horse race, a swimming competition etc. A predefined activation order can be pre-programmed to the controller of the apparatus. It is also possible that the predefined activation order is modified by the controller, depending on the current measurement setup and depending on the result of a previously conducted activation of the near field antennas. For instance, it is possible that some or all near field antennas are activated again in order to make the reading more reliable or in order to verify a previously conducted reading. A transponder ID is preferably an alphanumeric identifier that is programmed to the transponder upon manufacturing of the transponder. A participant ID is preferably a bib number that is also printed to a tricot, a tag or a sticker worn by or attached to the participant or a device of the participant. The terms near field and far field designate regions of an electromagnetic field around an object, such as a transmitting antenna, or the result of radiation scattering off an object. Non-radiative 'near-field' behaviors of electromagnetic fields dominate close to the antenna or scattering object, while electromagnetic radiation 'far-field' behaviors dominate at greater distances. Herein, a near field antenna can in particular be an induction loop for generating an inductive field (inductive coupling) or a capacitance for generating a capacitive field (capacitive coupling). It may also be possible that a combination is used.

These and other aspects of the invention will be apparent from and elucidated with reference to the embodiments described hereinafter. In the following drawings
- Fig. 1: shows a schematic illustration of participants of a sports event crossing a finish line and having a passing time measured by means of sports timing transponders;
- Fig. 2: shows a schematic perspective illustration of a system for reading a sports timing transponder according to the present invention;
- Fig. 3: shows a schematic illustration of near field antennas in the apparatus of the present invention;
- Fig. 4: shows a schematic illustration of an apparatus and a transponder tray;
- Fig. 5: shows a schematic illustration of an identification sheet;
- Fig. 6: shows a schematic illustration of an identification sheet being applied to a transponder tray; and
- Fig. 7: shows a schematic illustration of a method of the present invention.

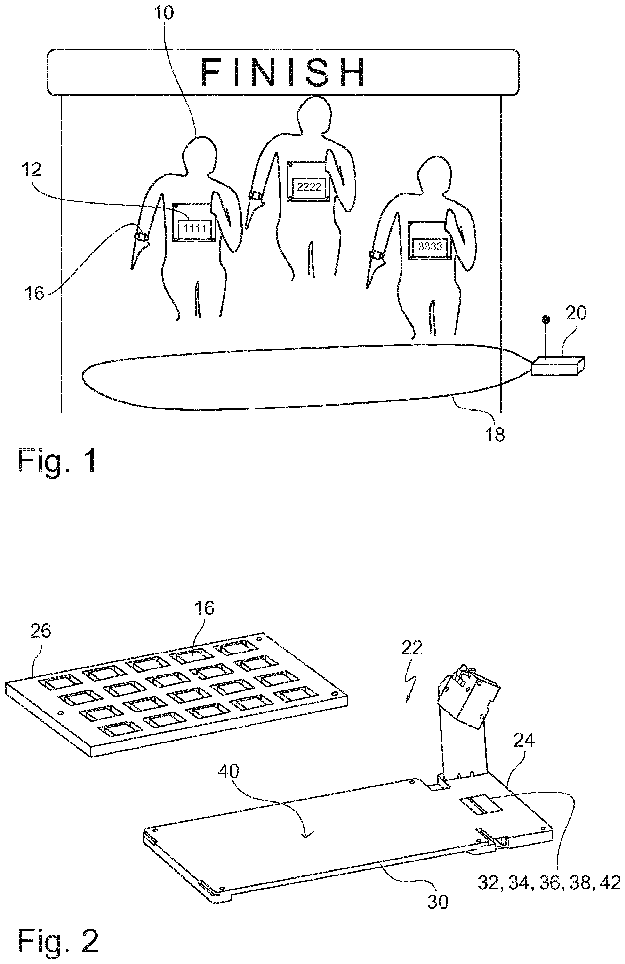

In Fig. 1 a plurality of participants 10 participating in a sports event (also referred to as athletes) is schematically illustrated. The participants 10 may particularly be runners in a running event such as a marathon or the like. A participant 10 is identified by means of a bib number corresponding to a participant ID 12 that can, e.g., be attached to the participant's shirt. Each participant 10 further carries a sports timing transponder 16. This sports timing transponder 16 may particularly be an active RFID transponder. This sports timing transponder 16 is used for carrying out a measurement of a passing time when the participant 10 crosses the start or finish line or split time measuring point. In order to carry out the measurement of the passing time a near field antenna 18 is arranged on the ground in the area of the finish line. In the illustrated example the near field antenna is an induction loop. Upon passing the near field antenna 18 the sports timing transponder 16 is activated and a measurement of the passing time is performed by measuring the signal strength of the near field. The near field is an inductive field in the illustrated example. The measurement of the passing time itself may either be carried out on the sports timing transponder or in the time measurement unit. Then, the transponder 16 sends out a communication signal, which is received by a corresponding time measurement unit 20. The communication signal indicates the transponder ID, which corresponds to a unique ID of the sports timing transponder 16 and the result of the passing time measurement in case the passing time is measured on the transponder 16.

Since the sports timing transponder 16 communicates its transponder ID, this transponder ID has to be correlated with the participant ID 12. For this purpose, usually a so-called chip file is used, in which each transponder ID is assigned a respective participant ID. Based on the chip file, it becomes possible to identify a participant to which the sports timing transponder 16 belongs.

In comparison to directly making use of a participant ID being programmed into the sports timing transponder instead of or in addition to the transponder ID, the use of a chip file has the advantage that it becomes possible to easily replace a transponder (a transponder ID) that is not functioning or that has been lost. However, the use of a correlation between a transponder ID that is transmitted from the transponder to the time measurement unit 20 makes it necessary that the corresponding chip file is generated and/or updated. This processing of this chip file is an elaborate process since it usually requires manual steps. The present invention aims at making the correlation of transponder IDs to participant IDs less complex and less expensive.

Fig. 2 schematically illustrates a system 22 for reading a sports timing transponder 16. The system comprises an apparatus 24 and a sports timing transponder 16. In the illustrated embodiment, a plurality of sports timing transponders 16 are arranged in a tray 26 that is used for storing and handling a population of transponders 16. For instance, a timer, i.e. a person or a company that organizes the sports event, has a number of transponders to be handed out to participants. Depending on the event he takes the required number of transponders to the sports event and generates the respective mapping based on the participant IDs of the participants of the sports event.

The apparatus 24 includes a holding unit 30, a controller 32, a receiver 34, a processing unit 36 and an output unit 38. Thereby, it is possible that the functionalities of the different units are partly or completely implemented in hard- and/or software. In particular, it is possible that the functionalities of the controller, receiver, processing unit and output unit are implemented in software on a microcontroller. In the illustrated embodiment the controller 32, receiver 34, processing unit 36, and output unit 38 are all included in a single microcontroller.

The holding unit 30 corresponds to a flat area of the apparatus 24 onto which a transponder 16 or, as illustrated in Fig. 2, a transponder tray 26 can be placed. The holding unit has a plurality of near field antennas (not illustrated in Fig. 2), which are arranged to generate near fields in an activation area 40. In the illustrated embodiment, the near field antennas are induction loops that are covered beneath the surface of a cover of the holding unit 30. The activation area 40 is an area in close spatial vicinity of the holding unit 30. The near field antennas of the holding unit 30 project near fields (inductive fields) into the activation area 40. If a transponder 16 is situated within the activation area 40 a measurement of a passing time is initiated in the transponder 16. In other words, a transponder 16 in the activation area 40 perceives the situation as if a near field antenna was crossed at a measuring point of a sports event (having a near field antenna for time measurement).

The controller 32 is configured to activate the near field antennas in a predefined activation order. The activation of the nearfield antenna triggers a measurement of a passing time in the transponder 16 in the activation area 40. Upon having completed the measurement of the passing time a communication signal is sent from the transponder 16 to the receiver 34. This communication signal includes the transponder ID of the transponder 16, similar to the situation when crossing a finish line in a sports event. Based on the transponder ID and the passing time on the one hand and the activation order of the plurality of near field antennas on the other, it is possible to calculate a position of the transponder 16 in the activation area 40. In other words, it is possible to determine which near field antenna was activated at the measured passing time and derive the position of the transponder from the position of said near field antenna. In the illustrated example, a position of the transponder 16 can, e.g., be indicated by means of a row and column combination in the transponder tray 26. The determined position and transponder ID is output via the output unit 38.

With respect to the determination of the passing time it is possible that the passing time is determined on the transponder 16 and that the results of the measurement of the passing time is communicated from the transponder 16 via the receiver 34 to the processing unit 36. Thus, a result of the measurement of the passing time could be included in the communication signal. Preferably, a wireless communication signal is exchanged. On the other hand, it is also possible that the result of the measurement is calculated on the processing unit based on the transponder ID and the moment in time at which the communication signal was received.

The output unit 38 generates representation data including information on the determined position and the transponder ID. Based on the generated representation data it is possible to generate assignment data corresponding to the chip file and including an assignment of a participant ID to the transponder ID. For this, the apparatus 24 may include an input interface 42, which, in the illustrated example, is also integrated in the microcontroller. Via this input interface 42 a list with a plurality of participant IDs is received. This list forms the basis for generating the assignment data taking into account the communication signal and the activation order. In this case, the output unit 38 may be configured to output the assignment data in the representation data. It is, however, also possible that the assignment data is generated externally in another device (based on the representation data).

In the illustrated embodiment the holding unit 39, the controller 32, the receiver 34, the processing unit 36 and the output unit 38 are integrated into a common housing. It is, however, also possible the some of the elements are fully or partly integrated into on ore more other housings. In particular, it is possible that the controller 32, the receiver 34, the processing unit 36 and the output unit 38 are partly integrated in a mobile device such as a laptop computer. The functionalities may fully or partly be implemented in soft- and/or hardware. Preferably, most functionalities are implemented in software running on a standard laptop computer. A communication and/or an exchange of signals between the different elements may be carried out wirelessly of cable-based.

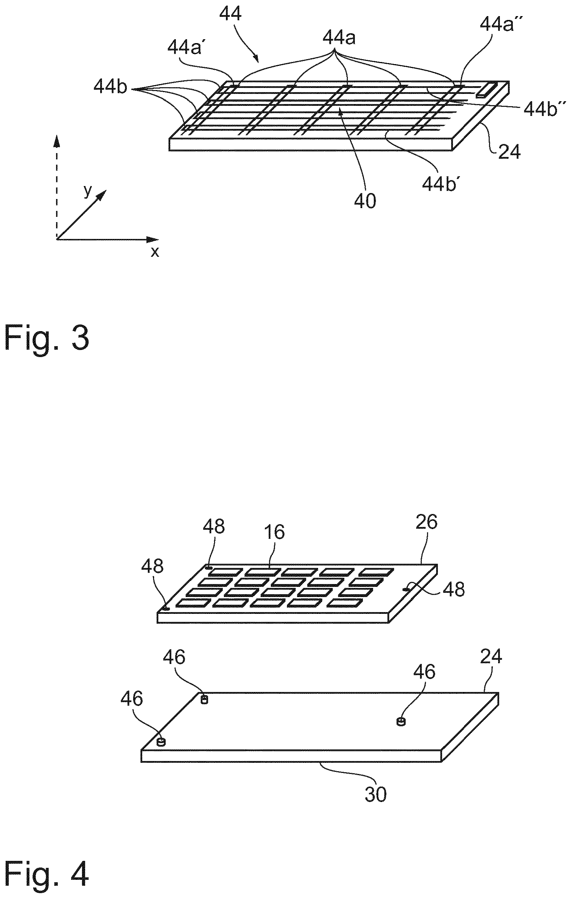

In Fig. 3 the arrangement of the near field antennas 44 in the activation area of the apparatus 24 is schematically illustrated. The illustrated example shows induction loops representing the near field antennas that generate inductive fields representing the near fields. The plurality of near field antennas 44 includes a first subset 44a of near field antennas and a second subset 44b of near field antennas. The near field antennas of each subset are arranged parallel to one another. The near field antennas of the first subset 44a are arranged orthogonal to and overlapping with the near field antennas of the second subset 44b. In the illustration, the y-axis is aligned with the near field antennas of the first subset 44a and the x-axis is aligned with the near field antennas of the second subset 44b. This arrangement makes it possible that the near fields of the two subsets are sequentially generated in a row and column order. In particular, it is possible to first activate a first outer near field antenna 44a' and then sequentially activate the near field antennas of the first subset 44a in the direction of a second outer near field antenna 44a". For a transponder 16 in the activation area 40 this sequential activation of the near field antennas in the direction of the x-axis is equivalent to the transponder 16 being moved over a stationary near field. In other words, the near field virtually passes the (stationary) transponder 16 in the activation area 40. A passing time of this transponder is then an indication of its x-coordinate along the x-axis. After sequentially activating the near field antennas of the first subset 44a, the near field antennas of the second subset 44b are sequentially activated from a first outer near field antenna 44b' to a second outer near field antenna 44b". Based thereupon it is possible to determine the transponder's y-coordinate along the y-axis. Consequently, a sequential activation of the near field antennas of the first subset 44a and, thereafter, a sequential activation of the near field antennas of the second subset 44b allows obtaining two coordinates, i.e. a two-dimensional position (xy-position indication) of the transponder 16 in the activation area 40.

In Fig. 4 it is schematically illustrated that it is possible to make use of unit positioning elements 46 included in the holding unit 30 of the apparatus 24. The unit positioning elements 46 interact with corresponding tray positioning elements 48 on the transponder tray 26 to unambiguously define a position of the transponder tray 26 with respect to the holding unit 30. In the illustrated embodiment, the unit positioning elements 46 of the holding unit 30 are protrusions whereas the tray positioning elements 48 of the transponder tray 26 are recesses. It is possible to make use of other configurations with respect to the number of positioning elements 46, 48 and the position of the positioning elements 46, 48. By placing the transponder tray 26 in a clearly defined position on the holding unit 30, it can be assured that the transponders 16 in the transponder tray 26 are located in predefined positions with respect to the holding unit 30. For instance, each transponder 16 can be situated in a direct vicinity of a crossing of the near field antennas 44 (cf. Fig. 3). Further, the positioning elements 48 of the transponder tray 26 can also be used for stacking the transponder tray 26 with further transponder trays.

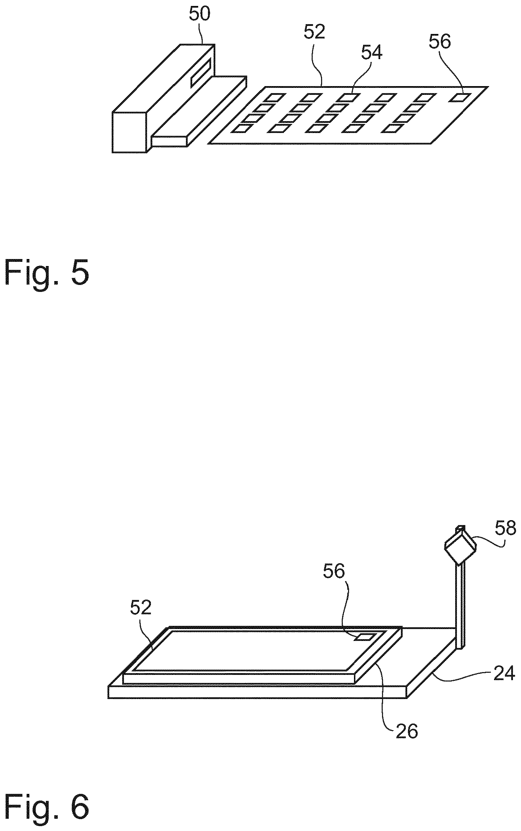

In Fig. 5 it is illustrated that a printer 50 may be used for printing an identification sheet 52 based on control information generated by the output unit. The printer 50 may be a standard printer and the identification sheet 52 may be a standard DIN A4 paper sheet. The identification sheet 52 includes a plurality of detachable transponder stickers 54. The stickers 54 are arranged in sheet positions on the identification sheet 52 that correspond to the predefined transponder positions as inherently defined by a transponder tray. Each sticker 54 may particularly include a participant ID that is assigned to the transponder in the respective position of the transponder tray. Thus, a sticker 54 can be used for identifying a transponder by attaching identification information to it.

The identification sheet 52 can be placed on the transponder tray to simultaneously attach the stickers 54 to all transponders in the tray. For this, the stickers 54 can be adhesive. Thereby, the identification sheet allows a batch labeling of multiple transponders in a transponder tray. The identification sheet 52 can correspond to a paper sheet having perforated areas that can be ripped out or detached after the printing process. These areas may also already have an adhesive substance for directly fixing the stickers 54 to the transponders in the tray.

Fig. 6 shows a schematic illustration of an apparatus 24 wherein an identification sheet 52 is placed on a transponder tray 26 in order to attach transponder stickers 54 to the transponders in the tray. In the illustrated embodiment the identification sheet 52 further has a machine-readable code 56 printed in a corner. This machine-readable code 56 can be read by a code scanner 58. In particular, the machine-readable code can be a barcode or a QR code and the code scanner 58 can be a corresponding barcode or QR-code reader. Also, it is possible that the code scanner 58 is a camera.

The code scanner 58 in combination with the machine-readable code 56 on the identification sheet 52 aim at assuring that the correct identification sheet 52 is used for a respective transponder tray 26. The identification sheet 52 is printed and the machine-readable code 56 includes control information representing the transponder IDs and positions that are assigned to the participant IDs that are printed on the identification sheet 52. To make sure that the correct identification sheet 52 is applied to a transponder tray 26, another read process is carried out. By this, it becomes possible for the apparatus 24 to determine whether the control information read by the code scanner 58 and printed on the identification sheet 52 in the form of the machine-readable code 56 match. Errors resulting from a false assignment of an identification sheet 52 to a transponder tray 26 can be detected and avoided.

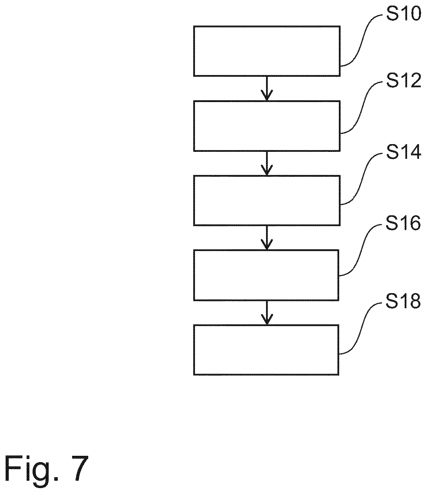

In Fig. 7 a method for reading a sports timing transponder according to the present invention is schematically illustrated. The method comprises the steps of holding S12 the transponder, activating S14 the plurality of near field antennas, receiving S16 a communication signal, determining S18 a position of the transponder and generating S20 representation data. The method may, e.g., be implemented in software to be carried out by a processor. The method may particularly be partly implemented in software.

The foregoing discussion discloses and describes merely exemplary embodiments of the present disclosure. As will be understood by those skilled in the art, the present disclosure may be embodied in other specific forms.

In the claims, the word "comprising" does not exclude other elements or steps, and the indefinite article "a" or "an" does not exclude a plurality. A single element or unit may fulfill the functions of several items recited in the claims. The mere fact that certain measures are recited in mutually different dependent claims does not indicate that a combination of these measures cannot be used to advantage.

The elements and units of the disclosed apparatuses, devices, circuitry and system may be implemented by corresponding hardware and/or software elements, for instance appropriated circuits. A circuit is a structural assemblage of electronic components including conventional circuit elements, integrated circuits including application-specific integrated circuits, standard integrated circuits, application-specific standard products, and field programmable gate arrays. Further a circuit includes central processing units, graphics processing units, and microprocessors which are programmed or configured according to software code. A circuit does not include pure software, although a circuit includes the above-described hardware executing software.

## Claims

1. Apparatus (24) for reading a sports timing transponder (16) corresponding to an active RFID tag, **characterized in that** the apparatus comprises:
a holding unit (30) for holding the transponder within an activation area (40), said holding unit having a plurality of near field antennas (44, 44a, 44b) for generating near fields in the activation area;
a controller (32) for activating the plurality of near field antennas in a predefined activation order to initiate a measurement of a passing time in the transponder in the activation area;
a receiver (34) for receiving a communication signal from the transponder including a transponder ID and a result of the measurement of the passing time;
a processing unit (36) for determining a position of the transponder within the activation area based on the communication signal and the predefined activation order and based on a determination which near field antenna was activated at the measured passing time; and
an output unit (38) for generating representation data including information on the determined position and the transponder ID.

2. Apparatus as claimed in claim 1, wherein the holding unit has a plurality of induction loops for generating inductive fields corresponding to the near field antennas and the near fields.

3. Apparatus (24) as claimed in any one of the preceding claims, wherein
the plurality of near field antennas (44, 44a, 44b) includes a first subset (44a) of near field antennas arranged parallel to one another and a second subset (44b) of near field antennas arranged parallel to one another;
the near field antennas of the first subset are arranged orthogonally to and overlapping with the near field antennas of the second subset; and the first subset preferably includes five near field antennas and the second subset preferably includes four near field antennas.

4. Apparatus (24) as claimed in claim 3, wherein the controller (32) is configured to
sequentially activate the near field antennas of the first subset (44a) starting with a first outer near field antenna (44a') of the first subset in a direction of a second outer near field antenna (44a") of the first subset; and
sequentially activate the near field antennas of the second subset (44b) starting with a first outer near field antenna (44b') of the second subset in a direction of a second outer near field antenna (44b") of the second subset.

5. Apparatus (24) as claimed in any one of the preceding claims, wherein the output unit (38) is configured to generate control information for controlling a printer (50) to print an identification sheet (52) with a detachable transponder sticker (54) to be attached to the transponder (16) based on the representation data, said transponder sticker being arranged on the identification sheet in a sheet position corresponding to the determined position of the transponder.

6. Apparatus (24) as claimed in any one of the preceding claims, including an input interface (42) for receiving an assignment list with a plurality of participant IDs (12) of participants (10) of a sports timing event, wherein
the processing unit (36) is configured to generate assignment data with an assignment of a participant ID to the transponder ID; and
the output unit (38) is preferably configured to generate representation data including an assigned participant ID for the transponder (16) based on the assignment data.

7. Apparatus (24) as claimed in any one of the preceding claims, wherein
the holding unit (30) is configured to hold a removable transponder tray (26) having multiple transponder notches for inserting the transponder (16);
the holding unit includes a unit positioning element (46) interacting with a corresponding tray positioning element (48) of the transponder tray to unambiguously define a transponder tray position with respect to the holding unit;
said unit positioning element preferably includes at least one protrusion and/or at least one recess interacting with a corresponding protrusion or recess of the tray positioning element.

8. Apparatus (24) as claimed in claims 4 and 7, wherein the holding unit (30) is configured to hold the transponder tray (26) in a transponder tray position in which the multiple transponder notches are each located in an immediate vicinity of a crossing of a first near field antenna of the first subset (44a) with a second near field antenna of the second subset (44b).

9. System (22) for reading a sports timing transponder (16) corresponding to an active RFID tag, comprising:
an apparatus (24) as claimed in any one of the preceding claims; and
a sports timing transponder for providing a measurement of a passing time upon initiation by a near field.

10. System (22) as claimed in claim 9, comprising a printer (50) for printing an identification sheet (52) with a detachable transponder sticker (54) to be attached to the transponder (16) based on the representation data, said detachable transponder sticker being arranged on the identification sheet in a sheet position corresponding to the determined position of the transponder.

11. System (22) as claimed in claim 10, comprising
a removable transponder tray (26) having multiple transponder notches for inserting the transponder (16), wherein
said identification sheet (52) has the same format as the transponder tray and is configured to be placed on the transponder tray for attaching the detachable transponder sticker (54) to the transponder (16).

12. System (22) as claimed in claim 11, wherein
the printer is configured to determine control information based on the representation data and to print a machine-readable code (56) including the control information on the identification sheet (52) in a predefined position;
the system comprises a code scanner (58) for reading the control information from the machine-readable code in the predefined position on the identification sheet when said identification sheet is placed on the transponder tray (26);
the processing unit (36) is configured to compare the control information with new representation data determined in a new read process; and the output unit (38) is configured to provide positive feedback when the control information corresponds to the new representation data.

13. System (22) as claimed in any one of claims 11 or 12, wherein the transponder tray (26) is stackable with further transponder trays;
includes a transparent material in the area of the notches; and/or
is designed for removing the transponder from a notch of the plurality of notches by means of a tilting movement.

14. Method for reading a sports timing transponder (16) corresponding to an active RFID tag, comprising the steps of:
holding (S10) the transponder within an activation area (40) of a holding unit (30), said holding unit having a plurality of near field antennas (44, 44a, 44b) for generating near fields in the activation area;
activating (S12) the plurality of near field antennas in a predefined activation order to initiate a measurement of a passing time in the transponder in the activation area;
receiving (S14) a communication signal from the transponder including a transponder ID and a result of the measurement of the passing time;
determining (S16) a position of the transponder within the activation area based on the communication signal and the predefined activation order
and based on a determination which near field antenna was activated at the measured passing time; and
generating (S18) representation data including information on the determined position and the transponder ID.

15. Computer program comprising program code means for causing a computer to carry out the steps of the method as claimed in claim 14 when said computer program is carried out on the computer.

## Patentansprüche

1. Vorrichtung (24) zum Auslesen eines einem aktiven RFID-Tag entsprechenden Sportzeitmesstransponders (16), **dadurch gekennzeichnet, dass** die Vorrichtung umfasst:
eine Halteeinheit (30) zum Halten des Transponders innerhalb eines Aktivierungsbereichs (40), wobei die Halteeinheit eine Vielzahl von Nahfeldantennen (44, 44a, 44b) zum Erzeugen von Nahfeldern in dem Aktivierungsbereich aufweist;
eine Steuereinheit (32) zum Aktivieren der Mehrzahl von Nahfeldantennen in einer vordefinierten Aktivierungsreihenfolge, um eine Messung einer Passierzeit in dem Transponder im Aktivierungsbereich zu starten;
einen Empfänger (34) zum Empfangen eines Kommunikationssignals von dem Transponder, das eine Transponder-ID sowie ein Ergebnis der Messung der Passierzeit umfasst;
eine Verarbeitungseinheit (36) zum Bestimmen einer Position des Transponders innerhalb des Aktivierungsbereichs basierend auf dem Kommunikationssignal und der vordefinierten Aktivierungsreihenfolge und basierend auf einer Ermittlung, welche Nahfeldantenne zur gemessenen Passierzeit aktiviert wurde; und
eine Ausgabeeinheit (38) zum Erzeugen von Darstellungsdaten einschließlich Informationen über die ermittelte Position und die Transponder-ID.

2. Vorrichtung nach Anspruch 1, wobei die Halteeinheit eine Vielzahl von Induktionsschleifen zum Erzeugen von Induktionsfeldern entsprechend den Nahfeldantennen und den Nahfeldern aufweist.

3. Vorrichtung (24) nach einem der vorhergehenden Ansprüche, wobei die Vielzahl von Nahfeldantennen (44, 44a, 44b) eine erste Teilmenge (44a) von parallel zueinander angeordneten Nahfeldantennen und eine zweite Teilmenge (44b) von parallel zueinander angeordneten Nahfeldantennen umfasst;
die Nahfeldantennen der ersten Teilmenge orthogonal und überlappend zu den Nahfeldantennen der zweiten Teilmenge angeordnet sind; und
die erste Teilmenge vorzugsweise fünf Nahfeldantennen umfasst und die zweite Teilmenge vorzugsweise vier Nahfeldantennen umfasst.

4. Vorrichtung (24) nach Anspruch 3, wobei die Steuereinheit (32) dazu ausgebildet ist,
die Nahfeldantennen der ersten Teilmenge (44a) sequentiell zu aktivieren, beginnend mit einer ersten äußeren Nahfeldantenne (44a') der ersten Teilmenge in einer Richtung einer zweiten äußeren Nahfeldantenne (44a") der ersten Teilmenge; und
die Nahfeldantennen der zweiten Teilmenge (44b) sequentiell zu aktivieren, beginnend mit einer ersten äußeren Nahfeldantenne (44b') der zweiten Teilmenge in einer Richtung einer zweiten äußeren Nahfeldantenne (44b") der zweiten Teilmenge.

5. Vorrichtung (24) nach einem der vorhergehenden Ansprüche, wobei die Ausgabeeinheit (38) dazu ausgebildet ist, Steuerungsinformationen zum Steuern eines Druckers (50) zu erzeugen, um basierend auf den Darstellungsdaten ein Identifikationsblatt (52) mit einem abnehmbaren Transponderaufkleber (54) zum Anbringen an dem Transponder (16) zu drucken, wobei der Transponderaufkleber auf dem Identifikationsblatt in einer Blattposition entsprechend der ermittelten Position des Transponders angeordnet ist.

6. Vorrichtung (24) nach einem der vorhergehenden Ansprüche, umfassend eine Eingabeschnittstelle (42) zum Empfangen einer Zuordnungsliste mit einer Vielzahl von Teilnehmer-IDs (12) von Teilnehmern (10) einer Sportzeitmessveranstaltung, wobei
die Verarbeitungseinheit (36) dazu ausgebildet ist, Zuordnungsdaten mit einer Zuordnung einer Teilnehmer-ID zu der Transponder-ID zu erzeugen; und
die Ausgabeeinheit (38) vorzugsweise dazu ausgebildet ist, Repräsentationsdaten einschließlich einer zugeordneten Teilnehmer-ID für den Transponder (16) basierend auf den Zuordnungsdaten zu erzeugen.

7. Vorrichtung (24) nach einem der vorhergehenden Ansprüche, wobei
die Halteeinheit (30) dazu ausgebildet ist, eine abnehmbare Transponderschale (26) mit mehreren Transponderkerben zum Einsetzen des Transponders (16) zu halten;
die Halteeinheit ein Einheitspositionierungselement (46) umfasst, das mit einem entsprechenden Schalenpositionierungselement (48) der Transponderschale zusammenwirkt, um eine eindeutige Transponderschalenposition in Bezug auf die Halteeinheit zu definieren;
das Einheitspositionierungselement vorzugsweise mindestens einen Vorsprung und/oder mindestens eine Aussparung umfasst, die zusammenwirken mit einem entsprechenden Vorsprung oder einer entsprechenden Aussparung des Schalenpositionierungselements.

8. Vorrichtung (24) nach Anspruch 4 und 7, wobei die Halteeinheit (30) dazu ausgebildet ist, die Transponderschale (26) in einer Transponderschalenposition zu halten, in der sich die Vielzahl von Transponderkerben jeweils in unmittelbarer Nähe einer Kreuzung einer ersten Nahfeldantenne der ersten Teilmenge (44a) mit einer zweiten Nahfeldantenne der zweiten Teilmenge (44b) befindet.

9. System (22) zum Auslesen eines einem aktiven RFID-Tag entsprechenden Sportzeitmesstransponders (16), umfassend:
eine Vorrichtung (24) nach einem der vorhergehenden Ansprüche; und
einen Sportzeitmesstransponder zum Bereitstellen einer Messung einer Passierzeit bei Initiierung durch ein Nahfeld.

10. System (22) nach Anspruch 9, umfassend einen Drucker (50) zum Drucken eines Identifikationsblatts (52) basierend auf den Darstellungsdaten mit einem abnehmbaren Transponderaufkleber (54) zum Anbringen an dem Transponder (16), wobei der abnehmbare Transponderaufkleber auf dem Identifikationsblatt in einer Blattposition entsprechend der ermittelten Position des Transponders angeordnet ist.

11. System (22) nach Anspruch 10, umfassend
eine abnehmbare Transponderschale (26) mit mehreren Transponderkerben zum Einsetzen des Transponders (16), wobei
das Identifikationsblatt (52) das gleiche Format wie die Transponderschale aufweist und dazu ausgebildet ist, auf der Transponderschale angebracht zu werden, um den ablösbaren Transponderaufkleber (54) am Transponder (16) zu befestigen.

12. System (22) nach Anspruch 11, wobei
der Drucker dazu ausgebildet ist, Steuerungsinformationen basierend auf den Darstellungsdaten zu ermitteln und einen maschinenlesbaren Code (56) einschließlich der Steuerungsinformationen auf dem Identifikationsblatt (52) in einer vordefinierten Position zu drucken;
das System einen Code-Scanner (58) umfasst zum Auslesen der Steuerungsinformationen aus dem maschinenlesbaren Code in der vordefinierten Position auf dem Identifikationsblatt, wenn das Identifikationsblatt auf der Transponderschale (26) angebracht wird;
die Verarbeitungseinheit (36) dazu ausgebildet ist, die Steuerungsinformationen mit neuen Darstellungsdaten zu vergleichen, die in einem neuen Ausleseprozess bestimmt wurden; und
die Ausgabeeinheit (38) dazu ausgebildet ist, eine positive Rückmeldung zu geben, wenn die Steuerungsinformationen den neuen Darstellungsdaten entsprechen.

13. System (22) nach einem der Ansprüche 11 oder 12, wobei die Transponderschale (26)
mit weiteren Transponderschalen stapelbar ist;
ein transparentes Material im Bereich der Kerben aufweist; und/oder
zum Entfernen des Transponders aus einer Kerbe der Mehrzahl von Kerben mittels einer Kippbewegung ausgebildet ist.

14. Verfahren zum Auslesen eines einem aktiven RFID-Tag entsprechenden Sportzeitmesstransponders (16), umfassend die Schritte:
Halten (S10) des Transponders in einem Aktivierungsbereich (40) einer Halteeinheit (30), wobei die Halteeinheit eine Vielzahl von Nahfeldantennen (44, 44a, 44b) zum Erzeugen von Nahfeldern in dem Aktivierungsbereich umfasst;
Aktivieren (S12) der Vielzahl von Nahfeldantennen in einer vordefinierten Aktivierungsreihenfolge, um eine Messung einer Passierzeit in dem Transponder im Aktivierungsbereich zu starten;
Empfangen (S14) eines Kommunikationssignals von dem Transponder, das eine Transponder-ID und ein Ergebnis der Messung der Passierzeit enthält;
Ermitteln (S16) einer Position des Transponders innerhalb des Aktivierungsbereichs basierend auf dem Kommunikationssignal und der vordefinierten Aktivierungsreihenfolge und basierend auf einer Ermittlung, welche Nahfeldantenne zur gemessenen Passierzeit aktiviert wurde; und
Erzeugen (S18) von Darstellungsdaten, die Informationen über die ermittelte Position und die Transponder-ID enthalten.

15. Computerprogramm mit Programmcodemitteln, um einen Computer zu veranlassen, die Schritte des Verfahrens nach Anspruch 14 auszuführen, wenn das Computerprogramm auf dem Computer ausgeführt wird.

## Revendications

1. Appareil (24) de lecture d'un transpondeur de chronométrage de sport (16) correspondant à une étiquette RFID active, **caractérisé en ce que** l'appareil comprend :
une unité de maintien (30) pour maintenir le transpondeur au sein d'une zone d'activation (40), ladite unité de maintien présentant une pluralité d'antennes en champ proche (44, 44a, 44b) pour générer des champs proches dans la zone d'activation :
un contrôleur (32) pour activer la pluralité d'antennes en champ proche dans un ordre d'activation prédéfini pour initier la mesure d'un temps qui passe dans le transpondeur dans la zone d'activation :
un récepteur (34) pour recevoir un signal de communication du transpondeur comprenant une ID de transpondeur et le résultat d'une mesure du temps qui passe ;
une unité de traitement (36) pour déterminer la position du transpondeur au sein de la zone d'activation sur base du signal de communication et de l'ordre d'activation prédéfini et sur base d'une détermination de laquelle nouvelle antenne en champ a été activée au temps qui passe mesuré ; et
une unité de sortie (38) pour produire des données de représentation comprenant des informations sur la position déterminée et l'ID de transpondeur.

2. Appareil selon la revendication 1, dans lequel l'unité de maintien comprend une pluralité de boucles d'induction pour générer des champs inductifs correspondant aux antennes en champ proche et aux champs proches.

3. Appareil (24) selon l'une quelconque des revendications précédentes, dans lequel la pluralité d'antennes en champ proche (44, 44a, 44b) comprend un premier sous-ensemble (44a) d'antennes en champ proche agencées en parallèle l'une à l'autre et un deuxième sous-ensemble (44b) d'antennes en champ proche agencées en parallèle l'une à l'autre ;
les antennes en champ proche du premier sous-ensemble sont agencées de manière orthogonale aux antennes en champ proche du deuxième sous-ensemble et débordant sur elles ; et
le premier sous-ensemble comprend de préférence cinq antennes en champ proche et le deuxième sous-ensemble comprend de préférence quatre antennes en champ proche.

4. Appareil (24) selon la revendication 3, dans lequel le contrôleur (32) est configuré pour activer successivement les antennes en champ proche du premier sous-ensemble (44a) en commençant par une première antenne en champ proche extérieure (44a') du premier sous-ensemble dans la direction d'une deuxième antenne en champ proche extérieure (44a") du premier sous-ensemble, et activer successivement les antennes en champ proche du deuxième sous-ensemble (44b) en commençant par une première antenne en champ proche extérieure (44b') du deuxième sous-ensemble dans la direction d'une deuxième antenne en champ proche extérieure (44b") du deuxième sous-ensemble.

5. Appareil (24) selon l'une quelconque des revendications précédentes, dans lequel l'unité de sortie (38) est réalisée pour générer des informations de commande pour commander une imprimante (50) dans le but d'imprimer un feuillet d'identification (52) avec un autocollant de transpondeur détachable (54) à attacher au transpondeur (16) sur base des données de représentation, ledit autocollant de transpondeur se trouvant sur le feuillet d'identification dans une position de feuillet correspondant à la position déterminée du transpondeur.

6. Appareil (24) selon l'une quelconque des revendications précédentes, comprenant une interface d'entrée (42) destinée à recevoir une liste d'attribution accompagnée d'une pluralité d'ID de participants (12) parmi des participants (10) à un événement sportif à chronométrer, dans lequel
l'unité de traitement (36) est réalisée pour générer des données d'attribution avec l'attribution d'une ID de participant à l'ID au transpondeur, et
l'unité de sortie (38) est de préférence réalisée pour générer des données de représentation comprenant une ID de participant attribuée pour le transpondeur (16) sur base des données d'attribution.

7. Appareil (24) selon l'une quelconque des revendications précédentes, dans lequel
l'unité de maintien (30) est réalisée pour maintenir un plateau de transpondeur (26) amovible présentant une pluralité d'entailles de transpondeur pour l'insertion du transpondeur (16) ;
l'unité de maintien comprend un élément de positionnement de l'unité (46) interagissant avec un élément de positionnement de plateau correspondant (48) du plateau de transpondeur pour définir sans ambigüité une position du plateau de transpondeur par rapport à l'unité de maintien ;
ledit élément de positionnement de l'unité comprend de préférence au moins une protubérance et/ou au moins un enfoncement interagissant avec une protubérance ou un enfoncement correspondant de l'élément de positionnement de plateau.

8. Appareil (24) selon les revendications 4 et 7, dans lequel l'unité de maintien (30) est réalisée pour maintenir le plateau de transpondeur (26) dans une position de plateau de transpondeur dans laquelle la pluralité d'encoches de transpondeur sont chacune situées dans le voisinage immédiat d'une traversée d'une première antenne en champ proche du premier sous-ensemble (44a) avec une deuxième antenne en champ proche du deuxième sous-ensemble (44b).

9. Système (22) de lecture d'un transpondeur de chronométrage de sport (16) correspondant à une étiquette RFID active, comprenant :
un appareil (24) selon l'une quelconque des revendications précédentes: et
un transpondeur de chronométrage de sport pour donner la mesure d'un temps qui passe lors de l'initialisation par un champ proche.

10. Système (22) selon la revendication 9, comprenant une imprimante (50) pour imprimer un feuillet d'identification (52) avec un autocollant de transpondeur détachable (54) à attacher au transpondeur (16) sur base des données de représentation, ledit autocollant de transpondeur se trouvant sur le feuillet d'identification dans une position de feuillet correspondant à la position déterminée du transpondeur.

11. Système (22) selon la revendication 10, comprenant :
un plateau amovible de transpondeur (26) comprenant une pluralité d'encoches de transpondeur pour l'insertion du transpondeur (16), dans lequel ledit feuillet d'identification (52) présente le même format que le plateau de transpondeur et est réalisé pour être placé sur le plateau de transpondeur destiné à attacher l'autocollant de transpondeur (54) détachable au transpondeur (16).

12. Système (22) selon la revendication 11, dans lequel
l'imprimante est réalisée pour déterminer les informations de commande sur base des données de représentation et pour imprimer un code lisible par une machine (56) comprenant les informations de commande sur le feuillet d'identification (52) dans une position prédéfinie ;
le système comprend un scanner de code (58) servant à lire les informations de commande du code lisible par une machine dans une position prédéfinie sur le feuillet d'identification quand ledit feuillet d'identification est placé sur le plateau de transpondeur (26) ;
l'unité de traitement (36) est réalisée pour comparer les informations de commande avec de nouvelles données de représentation déterminées dans un nouveau processus de lecture : et
l'unité de sortie (38) est réalisée pour fournir un retour positif quand les informations de commande correspondent aux nouvelles données de représentation.

13. Système (22) selon l'une quelconque des revendications 11 ou 12, dans lequel le plateau de transpondeur (26) peut s'empiler sur d'autres plateaux de transpondeur ;
comprend une matière transparente dans la zone des encoches : et/ou est prévu pour enlever le transpondeur d'une encoche de la pluralité d'encoches par un mouvement d'inclinaison.

14. Méthode de lecture d'un transpondeur de chronométrage de sport (16) correspondant à une étiquette RFID active, comprenant les étapes suivantes :
le maintien (S10) du transpondeur au sein d'une zone d'activation (40) d'une unité de maintien (30), ladite unité de maintien présentant une pluralité d'antennes en champ proche (44, 44a, 44b) pour générer des champs proches dans la zone d'activation :
l'activation (S12) de la pluralité d'antennes en champ proche dans un ordre d'activation prédéfini pour initier la mesure d'un temps qui passe dans le transpondeur dans la zone d'activation :
la réception (S14) d'un signal de communication du transpondeur comprenant une ID de transpondeur et le résultat d'une mesure du temps qui passe ;
la détermination (S16) d'une position du transpondeur au sein de la zone d'activation sur base du signal de communication et de l'ordre d'activation prédéfini et sur base d'une détermination de laquelle nouvelle antenne en champ proche a été activée au temps qui passe mesuré ; et
la production (S18) de données de représentation comprenant des informations sur la position déterminée et sur l'ID de transpondeur.

15. Programme informatique comprenant des moyens de codage de programme pour qu'un ordinateur exécute les étapes selon la méthode telle que revendiquée à la revendication 14 quand ledit programme informatique est exécuté sur l'ordinateur.
